Europäisches Patentamt

European Patent Office

Office européen des brevets

(19)

(11) **EP 1 111 377 A1**

(12) **EUROPÄISCHE PATENTANMELDUNG**

(43) Veröffentlichungstag:
27.06.2001 Patentblatt 2001/26

(51) Int Cl.⁷: **G01N 25/18**, H01M 10/48

(21) Anmeldenummer: **99125795.7**

(22) Anmeldetag: **23.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **FRAUNHOFER-GESELLSCHAFT ZUR FÖRDERUNG DER ANGEWANDTEN FORSCHUNG E.V.**
**80636 München (DE)**

(72) Erfinder:
• **Leidl, Anton, Dr.Ing.**
**81739 München (DE)**
• **Müller, Rudolf, Prof.**
**82319 Starnberg (DE)**

(74) Vertreter: **Gagel, Roland, Dr.**
**Patentanwalt Dr. Roland Gagel,**
**Landsberger Strasse 480a**
**81241 München (DE)**

(54) **Verfahren und Vorrichtung zur Bestimmung der Konzentration eines Stoffes in einem Flüssigkeitsvolumen**

(57) Die vorliegende Erfindung betrifft ein Verfahren sowie eine Vorrichtung zur Bestimmung der Konzentration eines Stoffes in einem Flüssigkeitsvolumen, insbesondere der Säurekonzentration in Bleiakkumulatoren.

Bei dem Verfahren wird Heizleistung mit einem vorgegebenen zeitabhängigen Verlauf in das Flüssigkeitsvolumen eingekoppelt. Der resultierende zeitabhängige Temperaturverlauf bzw. einzelne Werte dieses Temperaturverlaufs werden am oder im Flüssigkeitsvolumen gemessen. Aus dem zeitabhängigen Temperaturverlauf bzw. den einzelnen Werten des Temperaturverlaufs wird unter Berücksichtigung des vorgegebenen zeitabhängigen Verlaufs Heizleistung die Konzentration des Stoffes ermittelt. Dies erfolgt vorzugsweise durch Vergleich mit entsprechend durchgeführten Eichmessungen.

Das erfindungsgemäße Verfahren und die zugehörige Vorrichtung ermöglichen insbesondere eine langzeitstabile Messung des Säurezustandes in Bleiakkumulatoren. Das Verfahren und die Vorrichtung sind einfach und preiswert herzustellen und ermöglichen die einfache Integration in einen Batteriebehälter.

EP 1 111 377 A1

## Beschreibung

### Anwendungsgebiet

Die vorliegende Erfindung betrifft ein Verfahren sowie eine Vorrichtung zur Bestimmung der Konzentration eines Stoffes in einem Flüssigkeitsvolumen. Das bevorzugte Anwendungsgebiet liegt hierbei in der Überwachung der Konzentration der Batteriesäure in Bleiakkumulatoren. Die kontinuierliche Überwachung des Ladezustandes von Bleiakkumulatoren, beispielsweise beim Einsatz in Kraftfahrzeugen, ist mit bekannten Techniken derzeit nicht mit einem vertretbaren technischen und finanziellen Aufwand realisierbar.

### Stand der Technik

Beim Laden und Entladen von Bleiakkumulatoren ändert sich die Konzentration der als Batteriesäure eingesetzten Schwefelsäure in einem Bereich von ca. 10% bis 35%. Da die Dichte der Säure bzw. deren Konzentration ein eindeutiges Maß für den Ladezustand der Batterie darstellt, ist es bekannt, eine Tauchsonde in die Batteriesäure einzuführen und deren Eintauchtiefe als Maß für das spezifische Gewicht und damit den Ladezustand der Batterie heranzuziehen. Für die Durchführung dieser Messung muss jedoch in der Praxis zunächst Flüssigkeit aus der Batterie entnommen und in das entsprechende Messgerät eingefüllt werden. Das Messgerät lässt sich daher nur für Einzelmessungen einsetzen. Eine permanente Betriebsüberwachung eines Bleiakkumulators würde bei diesem System eine komplexe und damit teure mechanische Anordnung erfordern.

Die weitere Möglichkeit der Messung der Säurekonzentration über die elektrische Leitfähigkeit stößt aufgrund der Aggressivität der Schwefelsäure auf große Probleme und ist daher im praktischen Einsatz nicht bekannt.

Die Aufgabe der vorliegenden Erfindung besteht darin, ein Verfahren sowie eine Vorrichtung zur Bestimmung der Säurekonzentration eines Flüssigkeitsvolumens anzugeben, die für Langzeitmessungen geeignet und auf kostengünstige Weise realisierbar sind.

### Darstellung der Erfindung

Die Aufgabe wird mit dem Verfahren und der Vorrichtung nach Anspruch 1 bzw. 14 gelöst. Vorteilhafte Ausgestaltungen des Verfahrens und der Vorrichtung sind Gegenstand der Unteransprüche.

Bei dem erfindungsgemäßen Verfahren wird Heizleistung mit einem vorgegebenen zeitabhängigen Verlauf in das Flüssigkeitsvolumen eingekoppelt. Der sich aufgrund der Einkopplung der Heizleistung ergebende zeitabhängige Temperaturverlauf bzw. einzelne Werte des Temperaturverlaufs werden am oder im Flüssigkeitsvolumen gemessen. Aus dem zeitabhängigen Temperaturverlauf bzw. den einzelnen Werten dieses Temperaturverlaufs wird unter Berücksichtigung des vorgegebenen zeitabhängigen Verlaufs der Heizleistung die Konzentration des Stoffes ermittelt.

Unter Heizleistung mit zeitabhängigem Verlauf ist hierbei zu verstehen, dass die Heizleistung nicht permanent bzw. kontinuierlich mit gleicher Amplitude erzeugt wird. Ein zeitabhängiger Verlauf kann beispielsweise durch Einkopplung eines Heizimpulses erreicht werden, der eine rechteckförmige Leistungskurve aufweist. Weitere Beispiele für eine Heizleistung mit zeitabhängigem Verlauf sind in den Unteransprüchen angegeben.

Das Verfahren ist auf alle Stoffe in Flüssigkeiten anwendbar, bei denen sich die Wärmekapazität und Wärmeleitfähigkeit des Flüssigkeitsvolumens mit der Konzentration der Stoffe ändert. Dies kann z.B. Suspensionen, Emulsionen oder Lösungen betreffen. Besonders vorteilhaft ist das Verfahren für die Bestimmung von Säurekonzentrationen, da es keinen direkten Kontakt der Messanordnung mit der Säure erfordert. Die nachfolgenden Ausführungen beziehen sich daher ohne Einschränkung des allgemeinen Erfindungsgedankens beispielhaft auf die Bestimmung der Säurekonzentration. Für den Fachmann ist jedoch offensichtlich, dass neben der Säurekonzentration mit dem erfindungsgemäßen Verfahren und der zugehörigen Vorrichtung auch die Konzentration anderer Stoffe, beispielsweise der Gehalt von bestimmten Schadstoffen in einem Flüssigkeitsvolumen, bestimmt werden kann.

Beim erfindungsgemäßen Verfahren wurde erkannt, dass die Änderung der Säurekonzentration neben der Dichte und der elektrischen Leitfähigkeit auch die Wärmekapazität und die Wärmeleitfähigkeit der Säure beeinflusst. Aus den erfindungsgemäß durchgeführten dynamisch thermischen Messungen kann somit der Säurezustand und damit auch der Ladezustand einer Batterie ermittelt werden.

Für die Ermittlung der Säurekonzentration können die physikalischen Zusammenhänge herangezogen werden, über die aus den thermischen Zeitkonstanten, die bei der Messung des zeitabhängigen Temperaturverlaufs bestimmt werden können, die Wärmekapazität der Flüssigkeit und damit deren Dichte abgeleitet werden kann. Dies erfordert ein rechnerisches Modell unter Berücksichtigung der bei der Messung vorliegenden geometrischen Verhältnisse.

Eine besonders einfache und vorteilhafte Bestimmung der Säurekonzentration wird durch einen Vergleich der gemessenen Werte des Temperaturverlaufs mit einer vorher ermittelten Eichkennlinie erreicht. Diese Eichkennlinie wird mit verschiedenen Säurekonzentrationen unter den gleichen Messbedingungen, d.h. insbesondere bei gleichem zeitabhängigem Temperaturverlauf der eingekoppelten Heizleistung, erstellt. Neben einer Eichkennlinie ist es auch möglich, aus Eichmessungen charakteristische Daten des Temperaturverlaufs in Abhängigkeit von der Säurekonzentration zu ermitteln und in einer Datenverarbeitungsanlage bzw. einem Mikroprozessor abzuspeichern. Bei komplexeren Eichdaten kann die Bestimmung der Säurekonzentration mit Methoden der multivariaten Signalanalyse erfolgen.

Das erfindungsgemäße Verfahren ermöglicht in vorteilhafter Weise die permanente Messung des Säurezustandes, beispielsweise in Bleiakkumulatoren. Die Messanordnung kann direkt in den Batteriebehälter integriert werden. Dies ermöglicht die ständige Überwachung des Ladezustandes der Batterie in einem Kraftfahrzeug.

Die Vorrichtung zur Bestimmung der Säurekonzentration des Flüssigkeitsvolumens umfasst ein Behältnis zur Aufnahme des Flüssigkeitsvolumens, das beispielsweise gleichzeitig als Gehäuse eines Bleiakkumulators dienen kann. In oder an dem Behältnis sind abgekapselt vom Flüssigkeitsvolumen zumindest ein Heizelement sowie zumoindest ein Thermofühler vorgesehen. Unter Thermofühler wird hierbei jedes Element zur Erfassung der Temperatur verstanden. Der Thermofühler und das Heizelement können hierbei auch durch ein einziges Element, beispielsweise einen temperaturabhängigen Widerstand, gebildet sein. Zur Ansteuerung des Heizelementes für die Beaufschlagung des Flüssigkeitsvolumens mit einer Heizleistung mit einem vorgegebenen zeitabhängigen Verlauf ist eine entsprechende Ansteuereinrichtung mit dem Heizelement verbunden.

In einer besonders vorteilhaften Ausführungsform dieser Vorrichtung weist das Behältnis von außen in den Innenraum, d.h. in das Flüssigkeitsvolumen, ragende Ausstülpungen auf, in die das Heizelement bzw. das Thermoelement von außen eingebracht sind. Die Einkopplung der Heizleistung bzw. die Messung der Temperatur erfolgt hierbei durch das Behältnismaterial bzw. die Behältniswand hindurch. Diese Ausgestaltung hat den besonderen Vorteil, dass keinerlei Abdichtung zwischen dem Flüssigkeitsvolumen und dem Heizelement bzw. dem Thermoelement erforderlich ist. Insbesondere müssen die elektrischen Zuleitungen für beide Bauteile nicht durch die Behältniswand hindurchgeführt werden.

Selbstverständlich lassen sich die beiden Bauteile auch direkt an der Wandung des Behältnisses außen anbringen. Ebenso können sie entsprechend abgekapselt innerhalb des Behältnisses vorgesehen sein. Die Anbringung kann hierbei in oder an der Seiten- oder Zwischenwand wie auch im oder am Boden des Behältnisses erfolgen.

Heizelemente und Temperaturfühler können z. B. als diskrete Bauelemente, auf einer Leiterplatte, in Dickoder in Dünnschichttechnik realisiert werden.

Die erfindungsgemäße Vorrichtung hat den Vorteil, dass sie eine langzeitstabile Messung des Säurezustandes des im Behältnis befindlichen Flüssigkeitsvolumens ermöglicht. Das Verfahren sowie die Vorrichtung sind einfach und preiswert herzustellen. Das Sensorbauelement bestehend aus Temperaturfühler und Heizelement kommt nicht direkt mit der Säure in Kontakt und kann vorteilhaft in das Behältnis integriert werden. So lässt sich beispielsweise ein Bleiakkumulator bereits mit in das Gehäuse integrierten Bauelementen herstellen.

Das erfindungsgemäße Verfahren sowie die erfindungsgemäße Vorrichtung werden nachfolgend anhand von Ausführungsbeispielen ohne Beschränkung des allgemeinen Erfindungsgedankens in Verbindung mit den Zeichnungen nochmals erläutert. Hierbei zeigen:

Fig. 1    ein erstes Beispiel für den Verlauf von Heizleistung und Temperatur bei Durchführung des erfindungsgemäßen Verfahrens;

Fig. 2    ein zweites Beispiel für den Verlauf von Heizleistung und Temperatur bei Durchführung des erfindungsgemäßen Verfahrens;

Fig. 3    ein Beispiel für die Ausgestaltung der erfindungsgemäßen Vorrichtung; und

Fig. 4    ein weiteres Beispiel für die Aufgestaltung der erfindungsgemäßen Vorrichtung.

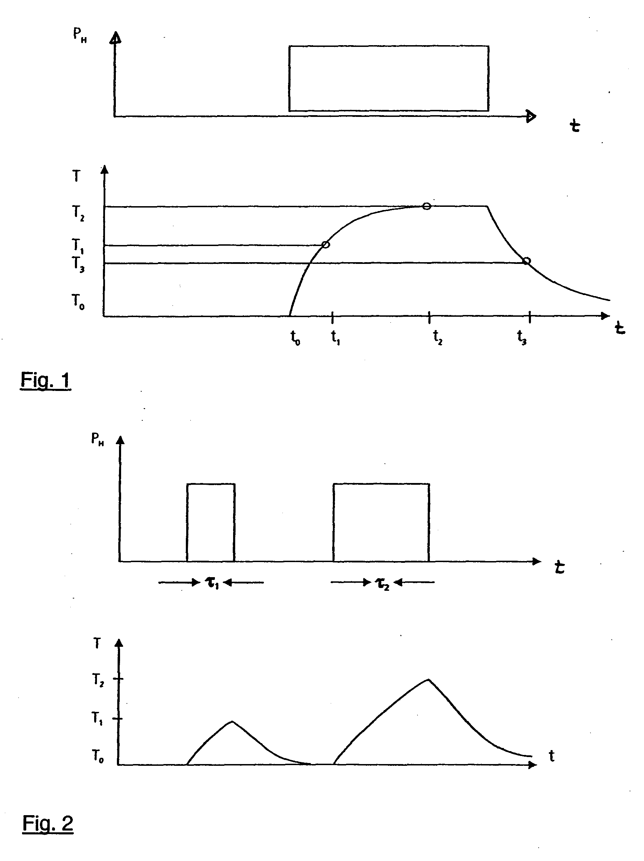

Figur 1 zeigt im oberen Teil ein erstes Beispiel für den Verlauf der in das Flüssigkeitsvolumen eingekoppelten Heizleistung PH als Funktion der Zeit t bei der Durchführung des erfindungsgemäßen Verfahrens. Die Heizleistung wird hierbei als Heizimpuls bestimmter Dauer mit konstanter Amplitude in das Flüssigkeitsvolumen eingekoppelt. Der untere Teil der Figur zeigt den Verlauf der am Flüssigkeitsvolumen mit einem Temperaturfühler gemessenen Temperatur. In diesem Fall wurde ein Heizimpuls mit einer Dauer gewählt, die das Erreichen eines stationären Wertes $T_2$ der Temperatur an der Messstelle ermöglicht. Dieser stationäre Endwert $T_2$ der Temperatur wird zum Zeitpunkt $t_2$ erreicht. $t_0$ bezeichnet den Startzeitpunkt des eingekoppelten Heizimpulses. Durch Erfassen zumindest einer weiteren Temperatur $T_1$ bzw. $T_3$ in der steigenden bzw. fallenden Flanke des Temperaturverlaufs sowie der Anfangstemperatur $T_0$ lassen sich ausreichend Informationen für die spätere Ermittlung der Säurekonzentration im Flüssigkeitsvolumen gewinnen. Die Temperaturdifferenz $T_2 - T_0$ ist abhängig von den Wärmeleitfähigkeiten $\lambda$ der festen Anordnung (Behältniswand bzw. Messanordnung) und der Flüssigkeit. Sie ist nicht abhängig von den zugehörigen Wärmekapazitäten. Die Wärmekapazitäten hingegen - einschließlich der Wärmekapazität der Batterieflüssigkeit - bestimmen die Anstiegs- und Abklingkurven der Temperatur. So ist beispielsweise die Temperaturdifferenz $T_1 - T_0$ abhängig von den Wärmeleitfähigkeiten $\lambda$ und den Wärmekapazitäten $\rho^* c_p$ ($\rho$: Dichte, $c_p$: spezifische Wärme). Diese sind speziell von den thermischen Zeitkonstanten des ermittelten Temperaturverlaufs abhängig.

Durch Messung der beiden beispielhaft angeführten Temperaturdifferenzen kann die Wärmekapazität der Flüssigkeit und damit die Dichte bestimmt werden:

$$T_2 - T_0 = f(\lambda)$$

$$T_1 - T_0 = g(\lambda, \lambda \rho C_p)$$

Wegen der Temperaturabhängigkeit der maßgebenden Materialkoeffizienten, insbesondere der Flüssigkeit, ist es erforderlich, auch die Temperatur $T_0$ zu messen. Die Auswertung der Messsignale erfolgt entweder, wie bereits erläutert, über vorher bestimmte Eichkennlinien oder über die Methoden der multivariaten Signalanalyse mit Hilfe eines Mikroprozessors, wobei auch hier Eichmessungen vorangehen.

Bei dem vorangehend erläuterten Beispiel des einzelnen Heizimpulses können anstelle der Temperaturdifferenz $T_1 - T_0$ selbstverständlich auch andere Temperaturdifferenzen des Temperaturverlaufs, wie beispielsweise $T_3 - T_0$ für die Auswertung herangezogen werden. Bei der praktischen Messung kann entweder die Zeitdifferenz $t_1 - t_0$ vorgegeben werden und die Temperaturen bei diesen Zeiten gemessen werden, oder die Temperaturen $t_1$ bzw. $t_3$ werden vorgegeben und die zugehörigen Zeiten gemessen. Selbstverständlich ist es auch möglich weitere Temperaturbestimmungen bzw. Zeitbestimmungen vorzunehmen.

Figur 2 zeigt eine weitere Variante des erfindungsgemäßen Verfahrens, bei der zwei voneinander beabstandete Heizimpulse in das Flüssigkeitsvolumen eingekoppelt werden. Bei diesem Beispiel werden mindestens zwei Heizimpulse unterschiedlicher Länge eingekoppelt, wobei höchsten ein Impuls eine Dauer aufweisen darf, bei der eine stationäre Temperatur an der Messstelle erreicht wird. Der bzw. die übrigen Impulse müssen kürzer als das hierfür erforderliche Zeitintervall sein. Die obere Abbildung der Figur 2 zeigt hierbei einen vorderen kurzen Impuls mit der Dauer $\tau_1$ sowie einen nachfolgenden zweiten Impuls der Dauer $\tau_2$. Im unteren Teil der Abbildung ist wiederum die Antwort des Flüssigkeitsvolumens, d.h. der Temperaturverlauf, in Abhängigkeit von der Zeit dargestellt. Die Pausen zwischen den beiden Impulsen sollten länger sein als die zur Erzielung eines stationären Wertes der Temperatur erforderlichen Zeitkonstante. Im vorliegenden Beispiel werden bei der Messung neben der Anfangstemperatur $T_0$ die Temperaturdifferenzen $T_2 - T_0$ bzw. $T_1 - T_0$ erfasst und für die Auswertung herangezogen.

Selbstverständlich ist neben den in diesen Ausführungsbeispielen dargestellten Rechteckimpulsen für den Verlauf der Heizleistung jede andere Impulsform, beispielsweise Sinus oder Sägezahn möglich. Bei einer sinusförmigen Anregung können dann beispielsweise die Maximalamplituden des Temperaturverlaufs sowie die Phasenverschiebung ausgewertet werden. Dies gilt grundsätzlich für jede Heizleistung mit einem periodischen Verlauf und einer festen Phase. Durch alleinige Ermittlung der Phasenverschiebung, mit der der Temperaturverlauf des Flüssigkeitsvolumens der eingekoppelten Heizleistung folgt, kann ebenfalls - bei Vergleich mit einer entsprechenden Eichkurve - die Säurekonzentration bestimmt werden.

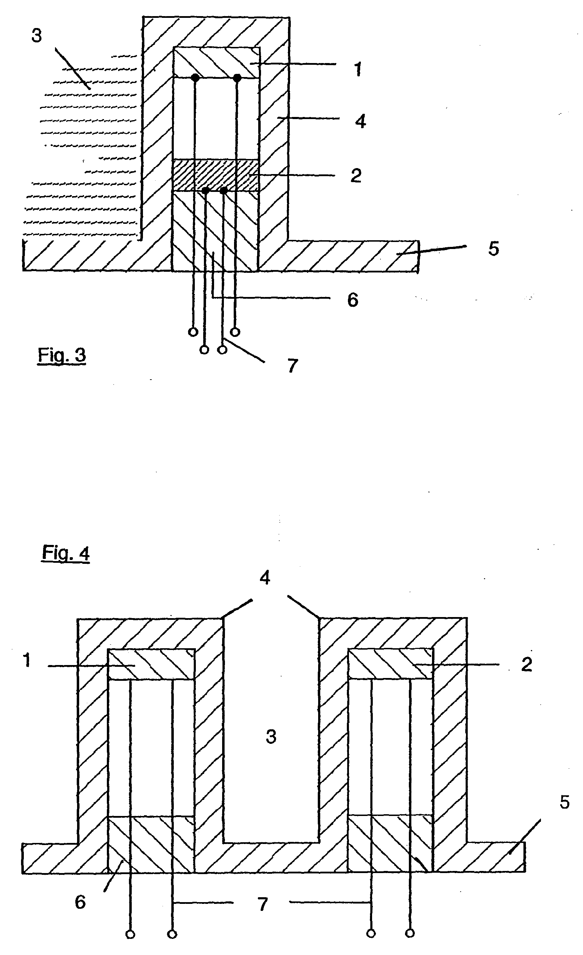

Figur 3 zeigt beispielhaft eine Ausführungsform eines Teils einer erfindungsgemäßen Vorrichtung. Die erfindungsgemäße Vorrichtung umfasst hierbei das Gehäuse 5 einer Batterie bzw. eines Bleiakkumulators, das hier nur abschnittsweise dargestellt ist. In der Gehäusewand ist eine Einstülpung 4 vorgesehen, in die ein Heizelement 1 sowie ein Thermofühler 2 eingebracht sind. Die Einstülpung 4 ist in diesem Beispiel im Boden des Gehäuses 5 angeordnet. Im Gehäuse selbst befindet sich die Flüssigkeit 3 mit der Säure, die über die Gehäusewandung in thermischem Kontakt mit dem Heizelement 1 und dem Thermofühler 2 steht. Zwischen Heizelement und Thermofühler ist ein wärmeisolierendes Material, beispielsweise Luft eingebracht. Die Anschlussleitungen 7 für das Heizelement 1 und den Thermofühler 2 werden durch einen wärmedämmenden Abschluss 6 hindurch vom Gehäuse 5 weggeführt. In dieser Ausführungsform ist sehr gut zu erkennen, dass durch geeignete Ausbildung des Gehäuses 5 keinerlei Abdichtung zum Messsensor bestehend aus Thermofühler 2 und Heizelement 1 erforderlich ist. Dies ist insbesondere für den Einsatz in Bleiakkumulatoren von großem Vorteil. Die Sensoreinheit wird hierdurch optimal vor direktem Kontakt mit der aggressiven Batteriesäure geschützt.

Zur Vermeidung von Strömungseinflüssen im Flüssigkeitsvolumen kann um die Sensoreinheit herum ein strömungsgeschützter Bereich geschaffen werden.

Figur 4 zeigt schließlich eine weitere Ausführungsform einer erfindungsgemäßen Vorrichtung, bei der das Heizelement 1 und der Thermofühler 2 in unterschiedlichen Ausstülpungen bzw. Trenches 4 des Batteriegehäuses 5 angeordnet sind. Durch diese Anordnung ist der Einfluss der Wärmekapazität des Flüssigkeitsvolumens, das sich zwischen den beiden Trenches 4 befindet, stärker, so dass der Ladezustand besonders genau bestimmt werden kann. Im Übrigen gelten für diese Ausführungsform die gleichen Vorteile und Ausführungen wie in Zusammenhang mit der Figur 3 angeführt.

Bezugszeichenliste

1   Heizelement
2   Thermofühler
3   Flüssigkeitsvolumen bzw. Säure
4   Einstülpung/Trench
5   Batteriegehäuse
6   wärmedämmender Abschluss

7 Anschlussleitungen

**Patentansprüche**

1. Verfahren zur Bestimmung der Konzentration eines Stoffes in einem Flüssigkeitsvolumen, insbesondere zur Bestimmung der Säurekonzentration in Bleiakkumulatoren, mit folgenden Schritten:

   - Einkoppeln von Heizleistung in das Flüssigkeitsvolumen, die einen vorgegebenen zeitabhängigen Verlauf aufweist;
   - Messen eines durch das Einkoppeln der Heizleistung hervorgerufenen zeitabhängigen Temperaturverlaufs oder einzelner Werte des Temperaturverlaufs am oder im Flüssigkeitsvolumen; und
   - Ermitteln der Konzentration des Stoffes im Flüssigkeitsvolumen aus dem zeitabhängigen Temperaturverlauf oder den einzelnen Werten des Temperaturverlaufs unter Berücksichtigung des vorgegebenen zeitabhängigen Verlaufs der Heizleistung.

2. Verfahren nach Anspruch 1,
   dadurch gekennzeichnet,
   dass das Ermitteln der Konzentration durch Vergleich des Temperaturverlaufs oder der einzelnen Werte des Temperaturverlaufs mit einer Eichkennlinie oder entsprechenden Eichwerten erfolgt.

3. Verfahren nach Anspruch 1,
   dadurch gekennzeichnet,
   dass das Ermitteln der Konzentration über ein Datenverarbeitungsprogramm anhand von charakteristischen Eigenschaften des zeitabhängigen Temperaturverlaufs erfolgt, die bei Eichmessungen bestimmt wurden.

4. Verfahren nach einem der Ansprüche 1 bis 3,
   dadurch gekennzeichnet,
   dass die Heizleistung als Heizimpuls mit einer Dauer eingekoppelt wird, bei der sich eine stationäre Temperatur $T_s$ beim Messen des Temperaturverlaufs einstellt.

5. Verfahren nach Anspruch 4,
   dadurch gekennzeichnet,
   dass als einzelne Werte des Temperaturverlaufs zumindest jeweils die stationäre Temperatur $T_s$ und ein Temperaturwert $T_1$ zu einem Zeitpunkt $t_1$ in einer steigenden Flanke oder einer fallenden Flanke des Temperaturverlaufs sowie eine vor dem Einkoppeln des Heizimpulses vorliegende Temperatur $T_0$ gemessen werden.

6. Verfahren nach Anspruch 5,

dadurch gekennzeichnet,
dass entweder die Temperatur $T_1$ vorgegeben und die Zeit $t_1$ bei Erreichen der Temperatur $T_1$ gemessen oder der Zeitpunkt $t_1$ vorgegeben und die Temperatur $T_1$ nach Erreichen des Zeitpunkts $t_1$ gemessen wird.

7. Verfahren einem der Ansprüche 1 bis 3,
   dadurch gekennzeichnet,
   dass die Heizleistung in Form mehrerer Heizimpulse eingekoppelt wird, von denen zumindest einer eine Dauer aufweist, bei der sich keine annähernd stationäre Temperatur beim Messen des Temperaturverlaufs einstellt, und deren zeitlicher Abstand grösser ist als die zur Einstellung einer stationären Temperatur zwischen den Heizimpulsen erforderliche Zeit.

8. Verfahren nach Anspruch 7,
   dadurch gekennzeichnet,
   dass als einzelne Werte des Temperaturverlaufs zumindest jeweils die Temperaturmaxima des Temperaturverlaufs sowie eine vor dem Einkoppeln der Heizimpulse vorliegende Temperatur $T_0$ gemessen werden.

9. Verfahren nach einem der Ansprüche 1 bis 3, 7 und 8,
   dadurch gekennzeichnet,
   dass als vorgegebener zeitabhängiger Verlauf der Heizleistung ein periodischer Verlauf mit einer festen Phase gewählt wird.

10. Verfahren nach Anspruch 9,
    dadurch gekennzeichnet,
    dass der periodische Verlauf sinusförmig, rechteckförmig oder sägezahnförmig gewählt wird.

11. Verfahren nach Anspruch 9 oder 10,
    dadurch gekennzeichnet,
    dass die Konzentration des Stoffes aus der Phasenverschiebung zwischen dem zeitabhängigen Verlauf der Heizleistung und dem Temperaturverlauf ermittelt wird.

12. Verfahren nach einem der Ansprüche 1 bis 11,
    dadurch gekennzeichnet,
    dass das Einkoppeln der Heizleistung über ein oder mehrere Heizelemente (1) erfolgt.

13. Verfahren nach einem der Ansprüche 1 bis 12,
    dadurch gekennzeichnet,
    dass das Messen des Temperaturverlaufs oder einzelner Werte des Temperaturverlaufs mit einem oder mehreren Thermofühlern (2) erfolgt.

14. Vorrichtung zur Bestimmung der Konzentration eines Stoffes in einem Flüssigkeitsvolumen, mit:

- einem Behältnis (5) zur Aufnahme des Flüssigkeitsvolumens (3);
- zumindest einem Heizelement (1) zum Beaufschlagen des Flüssigkeitsvolumens (3) mit einer Heizleistung mit einem vorgegebenen zeitabhängigen Verlauf; und
- zumindest einem Thermofühler (2) zum Messen eines durch das Einkoppeln der Heizleistung hervorgerufenen zeitabhängigen Temperaturverlaufs oder einzelner Werte des Temperaturverlaufs an oder im Flüssigkeitsvolumen,
- wobei das Heizelement (1) und der Thermofühler (2) gegenüber dem Flüssigkeitsvolumen (3) abgekapselt am oder im Behältnis (5) angeordnet sind.

15. Vorrichtung nach Anspruch 14,
dadurch gekennzeichnet,
dass der Thermofühler (2) und das Heizelement (1) in einem gemeinsamen Gehäuse angeordnet sind, das in das Flüssigkeitsvolumen (3) ragt.

16. Vorrichtung nach Anspruch 14,
dadurch gekennzeichnet,
dass der Thermofühler (2) und das Heizelement (1) in zwei getrennten Gehäusen angeordnet sind, die voneinander beabstandet in das Flüssigkeitsvolumen (3) ragen.

17. Vorrichtung nach Anspruch 15 oder 16,
dadurch gekennzeichnet,
dass der oder die Gehäuse durch Ausstülpungen des Behältnisses (5) gebildet sind.

18. Vorrichtung nach einem der Ansprüche 14 bis 17,
dadurch gekennzeichnet,
dass Thermofühler und Heizelement aus einem einzigen temperaturabhängigen Widerstandselement gebildet sind, das die Heizleistung liefert und dessen Widerstand R(T) gemessen wird.

Fig. 1

Fig. 2

Fig. 3

Fig. 4

**Europäisches Patentamt**

# EUROPÄISCHER RECHERCHENBERICHT

Nummer der Anmeldung

EP 99 12 5795

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 196 13 234 A (FUNKE DR N GERBER GMBH) 9. Oktober 1997 (1997-10-09) * Ansprüche 1-18 * | 1,14,15, 18 | G01N25/18 H01M10/48 |
| Y | | 4 | |
| Y | US 5 806 979 A (GSCHNEIDNER JR KARL A ET AL) 15. September 1998 (1998-09-15) * Zusammenfassung * | 4 | |
| A | DE 42 21 189 A (YAMAMOTO TAKAKAZU ;YUASA BATTERY CO LTD (JP)) 7. Januar 1993 (1993-01-07) * Seite 2, Zeile 39 - Seite 3, Zeile 9 * | 1 | |
| X | DE 37 41 971 A (KIENINGER & OBERGFELL) 22. Juni 1989 (1989-06-22) * Anspruch 1; Abbildung 1 * | 14,16 | |
| X | DE 196 10 885 A (WIND FERDINAND DIPL ING) 25. September 1997 (1997-09-25) * Anspruch 1; Abbildung 1 * | 14,15 | |
| A | EP 0 348 245 A (HONEYWELL INC) 27. Dezember 1989 (1989-12-27) * Spalte 2, Zeile 23 - Spalte 4, Zeile 21; Abbildung 10 * | 1,14 | RECHERCHIERTE SACHGEBIETE (Int.Cl.7) G01N H01M |
| A | EP 0 576 260 A (SNOW BRAND MILK PROD CO LTD) 29. Dezember 1993 (1993-12-29) * Ansprüche 1,9,10 * | 1,14 | |
| A | DE 25 13 342 A (BORKOWETZ D I WOLFGANG) 7. Oktober 1976 (1976-10-07) * Anspruch 1 * | 14 | |

Der vorliegende Recherchenbericht wurde für alle Patentansprüche erstellt

| Recherchenort | Abschlußdatum der Recherche | Prüfer |
|---|---|---|
| BERLIN | 26. Mai 2000 | Brison, O |

**EP 1 111 377 A1**

**ANHANG ZUM EUROPÄISCHEN RECHERCHENBERICHT**
**ÜBER DIE EUROPÄISCHE PATENTANMELDUNG NR.**          EP 99 12 5795

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2000

| Im Recherchenbericht angeführtes Patentdokument | Datum der Veröffentlichung | Mitglied(er) der Patentfamilie | | Datum der Veröffentlichung |
|---|---|---|---|---|
| DE 19613234 A | 09-10-1997 | KEINE | | |
| US 5806979 A | 15-09-1998 | WO | 9822788 A | 28-05-1998 |
| DE 4221189 A | 07-01-1993 | JP | 2659631 B | 30-09-1997 |
| | | JP | 5010908 A | 19-01-1993 |
| | | JP | 6052904 A | 25-02-1994 |
| | | US | 5273841 A | 28-12-1993 |
| DE 3741971 A | 22-06-1989 | KEINE | | |
| DE 19610885 A | 25-09-1997 | KEINE | | |
| EP 0348245 A | 27-12-1989 | US | 4944035 A | 24-07-1990 |
| | | AT | 143494 T | 15-10-1996 |
| | | CA | 1336621 A | 08-08-1995 |
| | | DE | 68927242 D | 31-10-1996 |
| | | DE | 68927242 T | 06-03-1997 |
| | | DK | 312389 A | 25-12-1989 |
| | | JP | 2797198 B | 17-09-1998 |
| | | JP | 3191852 A | 21-08-1991 |
| EP 0576260 A | 29-12-1993 | JP | 2579265 B | 05-02-1997 |
| | | JP | 6003311 A | 11-01-1994 |
| | | JP | 2594867 B | 26-03-1997 |
| | | JP | 6109674 A | 22-04-1994 |
| | | AU | 4142393 A | 23-12-1993 |
| | | CA | 2098867 A | 23-12-1993 |
| | | US | 5348394 A | 20-09-1994 |
| DE 2513342 A | 07-10-1976 | KEINE | | |

EPO FORM P0461

Für nähere Einzelheiten zu diesem Anhang : siehe Amtsblatt des Europäischen Patentamts, Nr.12/82